# EUROPEAN PATENT APPLICATION

(11) **EP 2 320 059 A1**
(43) Date of publication of application: **11.05.2011**
(21) Application number: 10190493.6
(22) Date of filing: 09.11.2010
(51) Int. Cl.: F02M 25/022

(54) **Ecological/fuel optimization device for internal combustion engines which increases a moist air mass entering said engine by means of vacuum suction or normal aspiration**

(30) Priority: 10.11.2009 AR P090104328
(71) Applicant: Aquapower S.A., Buenos Aires (AR)
(72) Inventor: Bortolussi, Daniel Osvaldo, San Luis (AR)
(74) Representative: Delorme, Nicolas

(57) **Abstract**

An ecological/fuel optimization device for internal combustion engines which increases a mass of moist air entering said engine by means of vacuum suction or normal aspiration, wherein said device comprises a container (1) which exhibits two compartments:
- a compartment A including on its top portion a room air inlet (4) and an outlet for a mass of moist air (6), said room air inlet being connected to the central top portion of a buoy (3) by means of a flexible pipe (5), said buoy (3) including an air passage orifice (11), which carries the air that enters through said flexible pipe (5) towards a fluid column placed under said buoy (3); and a counterweight (7), said compartment A also including guide means (2) along which said buoy (3) moves, and a closing element (9) arranged on the central bottom portion of said compartment A; and
- a compartment B surrounding said compartment A, in fluid communication with the later by its bottom, the height of said compartment B being equal to the height difference between said compartment A and said buoy (3), such that the fluid column height coincides with the bottom portion of said buoy (3), said compartment B further including on its top portion a fluid refilling plug (8) and a pressure compensating orifice (8') which is also in fluid communication with the compartment A at the buoy (3) bottom level.

## Description

The present subject matter relates to a container including a buoy with counterweight which increases a moist air mass entering an internal combustion engine.

More specifically, the present invention refers to a novel construction of a buoy with counterweight mounted inside a fluid container, which allows the increase of moist air mass entering an internal combustion engine.

### Previous art

At present, there are known engines through which an air current passes through a fluid. Such engines include buoys intended to prevent noises and turbulences.

Document FR2412345 discloses a metallic catalyst-dispensing system for a combustion chamber within a forced current inlet port of a chemical reaction chamber, as for example a combustion chamber for fossil fuel combustion in a furnace or an internal combustion engine, which includes a container bearing an aqueous solution of the catalyst through which air bubbles from an inlet line before making bubble an oil layer wherein a second catalyst is dissolved. The inlet line is supported by a float or buoy so that its outlet end is at a fixed distance under the liquid surface.

Document US 1364696 discloses a liquid injection apparatus for internal combustion engines, consisting of a container for the liquid which is to be injected, a float or buoy arranged within the container in order to float on the liquid therein, means designed to admit room air into the container above the level of the liquid therein, means above the float in order to allow liquid to be withdrawn from the container and thus produce an air-liquid mixture, a tube or duct which carries from said means outwards in order to connect to a carburetor venturi and thence introduce said mixture into it, the tube or duct being such to allow free movement of the float as the container liquid level moves upwards or downwards.

Document JP57105544 discloses a fuel spray in a suction passage downstream a supercharger blower, constituting a system that supplements a main system which supplies fuel through the fuel injection pump. An ultrasonic vibrator is provided at the bottom of a housing, and the fuel, placed at a fixed level by means of a flotation chamber float, is sprayed in a size of several microns with the vibration, and dispersed within a mixing chamber.

Document GB2455878 discloses an air vapor suction device in engines for the supply of moist vapor to the air inlet of a petroleum or diesel combustion engine, which exhibits a section of a standard exhaust manifold of an exhaust system that comprises a fluid deposit with a filter and an outlet tube which is connected to a flotation chamber connected by tubing and by a heat-resistant non-return valve to a heating unit which is clamped to the exhaust manifold section of the engine exhaust system. The required fluid level is controlled by the flotation valve, and a precise vapor flow is controlled by the tubing selected diameter.

Document DE10333044 discloses an arrangement for charging a water-air mixture into an internal combustion engine, wherein the water system uses a two-section container, consisting of an air distributor with a number of tubes which ends are located in the water of the container, in order to introduce air between an air inlet and an air outlet via said water. Said container is provided with a water heater and a water feed attached to a water reservoir supplied with a float.

Document CN 200993059 discloses a device including a water-ethanol mixture for a diesel engine, in order to improve the effects related to consumption reduction, power saving and environmental protection of said diesel engine. Such device comprises a flotation chamber which top portion bears a water inlet joint fitted with an inlet valve. The top of the float is connected to the valve of the water inlet joint and controls the inlet valve.

Document CA2048663 discloses a water vaporization device which supplies moist cold vapor to an internal combustion engines. Said device comprises a vapor generator arranged around the exhaust pipe; a flotation chamber for said vapor generator water; a water reservoir and a vapor container.

Document RU2003127878 discloses a device for the supply of water to an internal combustion engine carburetor, as a fuel additive, without modifying carburetor and engine designs, thus providing an optimal water-fuel relation under all operating conditions of an engine with high stability of water spraying. The device comprises a water reservoir, a flotation chamber, water piping, and a water atomizer connected to the carburetor.

As it can be seen, previous art devices buoys which sole purpose is that for which they were created, that is, to float, accompanying suction or bubbling water columns. All of these try to introduce moist air into the engine. But the aim of the present invention is to increase the mass of the moist air during the same working period of the previous art devices.

Particularly, when the suction begins due to the vacuum produced by the engine, or by normal aspiration thereof, a water column should be surpassed, decreasing air velocity. The device according to the invention allows the fluid surface to be broken maintaining and the air speed as there is no fluid column to overcome. This is done by means of a particular construction of a float or buoy which diameter is slightly smaller than that of the container thereof. This allows a better humectation due to a residence in turbulent condition with an increase of speed.

As an additional advantage it is possible to minimize the size of the container upper chamber, as well as the final size of the device. Also, noises are reduced, and almost disappear. That is to say, with less air a larger humidified mass is generated.

### Object of the invention

In summary, the intention is to achieve, within the period of the previous art devices, a greater contact and to optimize humidification of the air, preventing the access of non-humidified air. This means that with calibrated flow rate steps, same may be minimized, as the optimized humidity, due to a longer residence, allows this to happen. For the devices of the prior art, to match the invention, size thereof should be increased, due to the fact that if steps or restrictions of flow are increased, the only thing achieved would be a larger air passage, even at another speed, providing the result of a lower humidification thereof. This increase of air necessary in prior art devices would provide an excess of air in the injection, unnecessary for the intended purpose, resulting in breakdowns and failures in the short time.

The device according to the invention comprises a vessel containing a fluid, preferably water, but it could also be the same fuel, said vessel exhibiting two compartments, one of them including a plug for fluid refilling and an orifice for pressure compensating purposes, the other compartment including a flexible pipe, a buoy with counterweight, a room air inlet and an outlet for a mass of moist air. Said buoy remains floating on the fluid and connected to the container air inlet via said flexible pipe. Further, the buoy closes the device when there is no more fluid. To such end, the buoy uses the counterweight located in its bottom portion and carries out such closing mechanically.

Accordingly, it is an object of the present invention the provision of an ecological/fuel optimization device for internal combustion engines which increases a moist air mass entering said engine by means of vacuum suction or normal aspiration, wherein said device comprises a container which exhibits two compartments:
- a compartment A including on its top portion a room air inlet and an outlet for a mass of moist air, said room air inlet being connected to the central top portion of a buoy by means of a flexible pipe, said buoy including an air passage orifice, which carries the air that enters through said flexible pipe towards a fluid column placed under said buoy; and a counterweight, said compartment A also including guide means along which said buoy moves, and a closing element arranged on the central bottom portion of said compartment A; and
- a compartment B surrounding said compartment A, in fluid communication with the later by its bottom, the height of said compartment B being equal to the height difference between said compartment A and said buoy, such that the fluid column height coincides with the bottom portion of said buoy, said compartment B further including on its top portion a fluid refilling plug and a pressure compensating orifice which is also in fluid communication with the compartment A at the buoy bottom level.

### Brief description of the figures

The invention will be better understood when reference is made to the drawings, in which:
Figure 1 depicts a side section of the container according to the present invention with the buoy in the upper portion thereof.
Figure 2 depicts a side section of the container according to the present invention with the buoy in the lower portion thereof.
Figure 3 depicts a side section of the buoy included in the container of the present invention.

### Detailed description of the invention

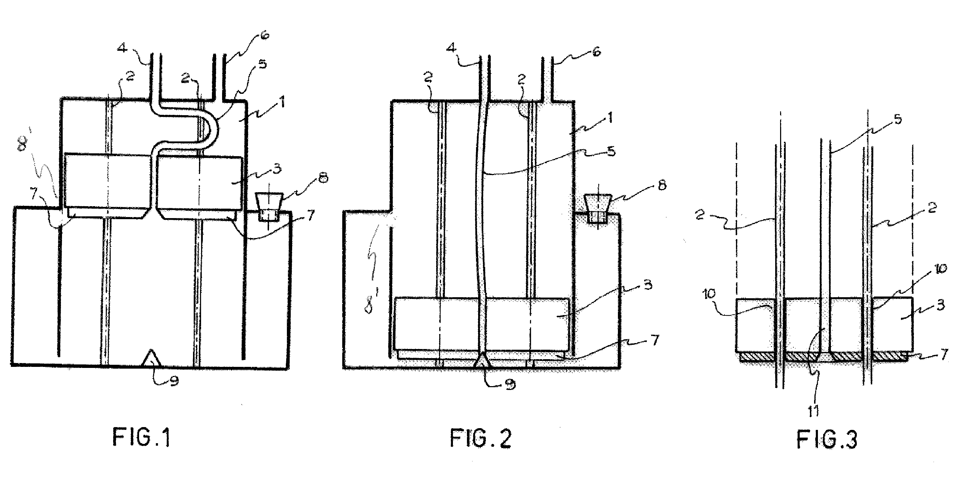

Figure 1 illustrates a container 1 divided in two compartments A and B. Inside compartment A guide means 2 are disposed along which a buoy 3 moves. Said guide means may be fixed rods attached to the lower and/or upper portion of compartment A or ribs located on the walls of compartment A interacting with grooves made on the wall of the buoy 3. On the upper portion of compartment A there is a room air inlet 4 which communicates through a flexible pipe 5 with said buoy 3, more specifically at the central portion thereof. One of the sides of said upper portion exhibits an outlet for a mass of moist air 6. It is to be noted that said room air inlet 4 and said mass of moist air outlet 6 may be located in any other position that a skilled person may consider convenient, said location not being a limitation to the invention. At a predetermined height of compartment A, compartment B is arranged, this compartment B shall establish the total fluid capacity of container 1 which shall coincide with the lower portion of buoy 3, arranged in compartment A as shown in Figure 1. At said predetermined level of said compartment B a fluid refilling plug 8 and an a pressure compensation orifice 8' which communicates compartment B with compartment A at the level of buoy 3 bottom, are disposed as previously mentioned. At the middle bottom portion of compartment A of said container 1, it is located a closing element 9 which allows closing of the inventive device when buoy 3 contacts same when there is no more fluid. The way of carrying out such closing is known by any skilled man of the art.

Figure 2 shows buoy 3 at the bottom of compartment A of said container 1, counterweight 7 contacting said closing element 9 when fluid of container 1 is totally wasted, thus requiring refilling. As can be seen, flexible pipe 5 is fully stretched.

Figure 3 is a detailed depiction of buoy 3, wherein three orifices can be seen, passing longitudinally through it, two of which will be defined as guide orifices 10, through which guide means 2 pass, as for example rods, and an orifice 11 through which air carried by flexible pipe 5 from environment passes towards the interior of container 1, contacting fluid and thus forming an humidification mass. Counterweight 7 can also be seen in detail at the bottom of buoy 3. As already mentioned, said guide means 2 may also consist of ribs within the container, that are in correspondence with grooves made on buoy 3 (not shown).

Basically, the difference with previous art is that buoy 3 is located inside compartment A of a container 1, which will be defined as working compartment. Said compartment A has a fixed diameter, and the diameter of buoy 3 is slightly smaller than that of said compartment A, preferably 2mm smaller. Height of the fluid column shall be fixed according to that of a compartment B or fluid reserve compartment, which shall be equal to the difference between the height of buoy 3 and the height of compartment A. Further, room air inlet towards fluid column is carried out by means of a flexible pipe above and not under said fluid column, said flexible pipe 5 being in communication with an air passage orifice 11 which passes through the whole buoy, in order to connect said air inlet 4 to said fluid column. Thus, should a bubbling effect be produced, it would be at a superficial level thereof. Once air enters through the flexible pipe 5 and it bubbled at the lower portion of buoy 3 without being sufficient fluid therein, bubbles "suffocate" at the bottom of buoy 3, and the counterweight 7 itself originates a negative force which opposes an uncontrolled jump of the bubbling action which ends pivoting within compartment A of said container 1. Said negative force pushes buoy 3 as the originating bubbles require the escape originated by the breaker effect towards the ends of buoy 3, forcing the rising of turbulent bubbles and smaller droplets wherein a humidification increase is produced due to an extension of residence.

By now it is evident that a very large container 1 is not necessary, as the buoy 3 action is to reduce bubbles rising towards the surface, but resisting at the same time such pressures by acting as a dumping support, minimizing noises, etc.

Note that a buoy 3 is not used with a constant fluid column, as in the case of jumps or sharp movements of a vehicle same would vary. Even in some cases, same would not even be in contact with the liquid. Accordingly, it may be established as operating conditions, the buoy diameter and height, and the distance between the buoy and the container, as the higher the buoy the longer residence time. This could be very well modified with a larger buoy diameter (change of diameter by height) and distance as compensator and regulator of drops speed, etc. The system guarantees performance thereof upon vehicle jumps or sharp movements.

Lastly, the device according to the invention is connected to a vacuum inlet of the intake manifold, or to the normal engine aspiration by means of a piping which diameter may vary from 2 to 13 mm, employing adapters for the different diameters of pipes entering the manifold, according to the selected pipe diameter. It is also possible to use an oval, square or rectangular piping changing the bullet effect of a cylindrical piping by the piston effect of an oval square or rectangular piping, reducing leaks originated from a cylindrical piping.

## Claims

1. An ecological/fuel optimization device for internal combustion engines which increases a mass of moist air entering said engine by means of vacuum suction or normal aspiration, wherein said device comprises a container (1) which exhibits two compartments:
- a compartment A including on its top portion a room air inlet(4) and an outlet for a mass of moist air (6), said room air inlet being connected to the central top portion of a buoy (3) by means of a flexible pipe (5), said buoy (3) including an air passage orifice (11), which carries the air that enters through said flexible pipe (5) towards a fluid column placed under said buoy (3), and a counterweight (7), said compartment A also including guide means (2) along which said buoy (3) moves, and a closing element (9) arranged on the central bottom portion of said compartment A; and
- a compartment B surrounding said compartment A, in fluid communication with the later by its bottom, the height of said compartment B being equal to the height difference between said compartment A and said buoy (3), such that the fluid column height coincides with the bottom portion of said buoy (3), said compartment B further including on its top portion a fluid refilling plug (8) and a pressure compensating orifice (8') which is also in fluid communication with the compartment A at the buoy (3) bottom level.

2. Device according to claim 1, **characterized in that** said guide means (2) consist of rods attached to the lower and/or upper portion of the compartment A that interact with guide orifices (10) located within said buoy 3, said rods passing through said orifices.

3. Device according to one of claims 1 to 2, **characterized in that** said guide means (2) consist of ribs arranged on the wall of compartment A and interact with grooves made on the wall of the buoy (3).

4. Device according to one of claims 1 to 3, **characterized in that** said closing element (9) allows said device to be closed when counterweight (7) of said buoy (3) contacts the device upon lack of fluid.

5. Device according to one of claims 1 to 4, **characterized in that** said container (1) is preferably cylindrical.

6. Device according to one of claims 1 to 5, **characterized in that** the diameter of said buoy (3) is slightly shorter than that of said compartment A, preferably 2mm shorter.

7. Device according to one of claims 1 to 6, **characterized in that** it is connected to an internal combustion engine through an oval, square, rectangular or similar piping.

8. Device according to one of claims 1 to 7, **characterized in that** said fluid is water.

9. Device according to one of claims 1 to 8, **characterized in that** said fluid is fuel.
